# EUROPÄISCHE PATENTSCHRIFT

(11) **EP 4 522 962 B1**
(45) Veröffentlichungstag und Bekanntmachung des Hinweises auf die Patenterteilung: **02.12.2026**
(21) Anmeldenummer: 23717995.7
(22) Anmeldetag: 17.04.2023
(51) Int. Cl.: G01M 3/20, G01M 3/26, G01M 3/22, G01M 3/32

(54) **LECKSUCHVORRICHTUNG UND LECKSUCHVERFAHREN ZUR DETEKTION EINES GASLECKS IN EINEM PRÜFLING**
LEAK-DETECTING DEVICE AND LEAK-DETECTING METHOD FOR DETECTING A GAS LEAK IN A TEST OBJECT
DISPOSITIF DE DÉTECTION DE FUITE ET PROCÉDÉ DE DÉTECTION DE FUITE POUR DÉTECTER UNE FUITE DE GAZ DANS UN OBJET À TESTER

(30) Priorität: 10.05.2022 DE 102022111596
(43) Veröffentlichungstag der Anmeldung: 19.03.2025
(73) Patentinhaber: Inficon GmbH, 50968 Köln (DE)
(72) Erfinder: WETZIG, Daniel, 50968 Köln (DE); DECKER, Silvio, 50968 Köln (DE)
(74) Vertreter: dompatent
(86) Internationale Anmeldenummer: PCT/EP2023/059896
(87) Internationale Veröffentlichungsnummer: WO 2023/217491

(56) Entgegenhaltungen:
- DE-A1- 102020 210 176
- JP-A- 2017 524 903
- US-A- 3 591 827
- US-A1- 2007 157 704
- US-A1- 2018 003 641
- US-A1- 2020 263 911

## Beschreibung

Die Erfindung betrifft eine Lecksuchvorrichtung und ein Lecksuchverfahren zur Detektion eines Gaslecks in einem Prüfling.

Bei der integralen Leckdetektion wird geprüft, ob Gas aus einem Prüfling entweicht, ohne dabei das Gasleck zu lokalisieren. Zum einen kann der Prüfling dabei in einer Prüfkammer enthalten sein, die an einem Gasdetektor angeschlossen ist, wobei der Prüfling mit einem Prüfgas druckbeaufschlagt ist, während die Prüfkammer evakuiert wird oder der Druck innerhalb der Prüfkammer zumindest geringer ist als innerhalb des Prüflings. Alternativ kann der in einer Prüfkammer oder Prüfhülle enthaltene Prüfling an den Gasdetektor angeschlossen sein und evakuiert werden, während die Prüfkammer bzw. Prüfhülle mit einem Prüfgas beaufschlagt wird oder ist, z.B. mit Raumluft. Mit der integralen Leckdetektion kann lediglich das Vorhandensein eines Lecks ermittelt werden, ohne ein Leck dabei zu lokalisieren.

Herkömmlicherweise erfolgt eine integrale Dichtheitsprüfung oftmals mit Hilfe eines Massenspektrometers, wobei die Prüfkammer mit einer Vorvakuumpumpe und/oder einer Turbomolekularpumpe evakuiert wird und mit dem Massenspektrometer im Vakuum der Prüfgasanteil in dem analysierten Gasgemisch gemessen wird. Das Messen des Prüfgasanteils wird auch als Partialdruckmessung bezeichnet. Der Prüfgasanteil ist ein Maß für die Leckrate eines Lecks im Prüfling. Dabei besteht grundsätzlich die Möglichkeit, einen Anstieg des Prüfgaspartialdrucks zu messen und als Hinweis auf ein Leck zu verwenden. Wenn der Anstieg bzw. die Rate des Anstiegs ("Rate of Rise" - Partialdruckanstieg pro Zeiteinheit) des gemessenen Prüfgases einen bestimmten Schwellenwert überschreitet, dient dies als Hinweis auf ein Leck. Alternativ wäre auch denkbar, ein Abnehmen des Prüfgasanteils zu erfassen und zu beurteilen, beispielsweise den Prüfgasanteil innerhalb des Prüflings.

Bei dem Akkumulationsprinzip wird der Totaldruckanstieg während eines vorgegebenen Zeitraums gemessen, d.h. der Anstieg bzw. die Rate des Anstiegs ("Rate of Rise" - Totaldruckanstieg pro Zeiteinheit) des absoluten Drucks innerhalb des Messvolumens, also innerhalb der den druckbeaufschlagten Prüfling enthaltenden Prüfkammer. Die Prüfkammer ist dabei verschlossen. Alternativ ist auch hierbei denkbar, eine Abnahme des Totaldrucks als Hinweis auf ein Leck zu erfassen, beispielsweise durch Betrachten des Drucks in dem druckbeaufschlagten Prüfling. Sobald die Druckveränderung, also die Zunahme oder die Abnahme des Totaldrucks, einen bestimmten Schwellenwert übersteigt, wird dies als Hinweis auf ein Leck verwendet.

DE 10 2020 210 176 A1 offenbart eine Überwachungs- und Messvorrichtung zur Überwachung und Messung von Kenngrößen eines Luftversorgungssystems von Fahrzeugen.

EP 2 217 902 B1 beschreibt eine Vorrichtung zur Dichtheitsprüfung.

JP2017 524 903 A offenbart eine Leckdetektionsvorrichtung zum Messen des Differenzialdrucks zwischen einer Prüfkammer und einer Referenzkammer.

US 2007/0157704 A1 beschreibt ein System zur Bestimmung der Dichtheit eines Objekts mit einem Hohlraum.

US 23,591,827 A1 beschreibt ein Vakuumsystem mit einem Massenspektrometer.

US 2018/003641 A1 beschreibt einen Leckdetektor zum Ermitteln eines Gaslecks in einer Gasströmungskomponente.

Der Erfindung liegt die Aufgabe zugrunde, eine verbessere Lecksuchvorrichtung und ein verbessertes Verfahren zur Detektion eines Gaslecks in einem Prüfling zu schaffen.

Die erfindungsgemäße Vorrichtung ist definiert durch die Merkmale von Patentanspruch 1. Das erfindungsgemäße Verfahren ist definiert durch die Merkmale von Patentanspruch 10.

Erfindungsgemäß ist ein Gasleitungsweg mit einem Anschluss für den Prüfling oder eine den Prüfling aufnehmende Prüfkammer vorgesehen. Der Gasleitungsweg ist mit einem Ventil zum Verschließen eines stromabwärtigen, d.h. dem Anschluss fernen Teils des Gasleitungsweges versehen. Als Strömungsrichtung des Gases wird dabei die Richtung vom Anschluss in Richtung des Ventils betrachtet. Der Anschluss befindet sich insofern stromaufwärts des Ventiles und das Ventil befindet sich stromabwärts des Anschlusses entlang des Gasleitungsweges. Zwischen dem Ventil und dem Anschluss ist der Gasleitungsweg mit einer Verdichterpumpe versehen, wobei zwischen der Verdichterpumpe und dem Ventil ein Verdichtungsvolumen ausgebildet ist, sodass der Einlass der Verdichterpumpe mit dem Anschluss und der Auslass der Verdichterpumpe mit dem Verdichtungsvolumen verbunden ist. Das Gas strömt dadurch von dem Anschluss entlang des Gasleitungsweges durch die Verdichterpumpe in das Verdichtungsvolumen. Das Ventil verhindert im geschlossenen Zustand, das Gas aus den Verdichtungsvolumen stromabwärts des Gasleitungsweges in stromabwärtiger Richtung weiterströmt. Die Verdichterpumpe verdichtet dadurch Gas, welches aus dem Prüfling oder der Prüfkammer durch den Anschluss in den Gasleitungsweg einströmt in das Verdichtungsvolumen hinein, sodass der Gasdruck innerhalb des Verdichtungsvolumens größer ist als am Anschluss oder als in dem Gasleitungsweg stromaufwärts der Verdichterpumpe. Das Verdichtungsvolumen ist dabei separat von dem Gasleitungsweg ausgebildet und mit dem Gasleitungsweg strömungstechnisch verbunden. Typischerweise ist das Verdichtungsvolumen über einen Einlass mit dem Auslass der Verdichterpumpe verbunden und über einen Auslass mit dem Ventil verbunden.

Während einer Akkumulationsphase wird dann das durch den Anschluss einströmende Gas mit der Verdichterpumpe in das Verdichtungsvolumen hinein verdichtet. Dadurch wird die Veränderung des Gasdrucks, d.h. der Gasdruckanstieg um einen Faktor verstärkt, der sich aus dem Verhältnis des Verdichtungsvolumens und des Prüflingsvolumens oder Prüfkammervolumens ergibt. Im Vergleich zu der herkömmlichen Messung des Druckanstiegs im Prüflingsvolumen resultiert daher ein verstärkter Druckanstieg, insbesondere, wenn das Verdichtungsvolumen geringer ist als das Prüflingsvolumen, bzw. das Volumen in der an den Anschluss angeschlossenen Prüfkammer.

In dem Verdichtungsvolumen kann alternativ zu der Messung einer zeitlichen Veränderung des Totaldrucks auch eine zeitliche Veränderung des Partialdrucks gemessen werden, der charakteristisch für das Leckagegas ist. Wenn zur Leckagedetektion ein bestimmtes Prüfgas verwendet wird, mit dem beispielsweise der Prüfling druckbeaufschlagt ist, kann als Partialdruck der Anteil des Prüfgases in dem untersuchten Gasgemisch erfasst werden. Das Prüfgas sollte sich dabei nach Möglichkeit von denjenigen Gaskomponenten unterscheiden, die von den oder aus den Innenwänden der Prüfkammer oder des Prüflings desorbieren, wie insbesondere Wasserdampf.

Von besonderem Vorteil ist es dabei, dass die Temperatur des Verdichtungsvolumens stabilisiert wird, nämlich unter Verwendung einer Heizvorrichtung, die das Verdichtungsvolumen beheizt und/oder einer Kühlvorrichtung, die das Verdichtungsvolumen kühlt und, weiterhin optional, eine Isoliervorrichtung, die das Verdichtungsvolumen thermisch gegenüber deren Umgebung isoliert. Dabei sollte ausschließlich das Verdichtungsvolumen thermisch stabilisiert werden.

Das Verdichtungsvolumen sollte möglichst größer als dasjenige der Rohrleitung des Gasleitungsweges sein. Das bedeutet, dass ein Abschnitt des Gasleitungsweges bzw. der Rohrleitung des Gasleitungsweges, welche eine gleiche Länge aufweist wie das Verdichtungsvolumen, einen geringeren Querschnitt aufweist als das Verdichtungsvolumen. Das Verdichtungsvolumen ist dann größer als das Volumen innerhalb eines gleichlangen Abschnitts des Gasleitungsweges. Zudem sollte das Verdichtungsvolumen geringer sein als das Volumen innerhalb der Prüfkammer oder des Prüflings.

Bei der Verdichterpumpe kann es sich um eine Vakuumpumpe handeln, die nicht notwendigerweise eine Turbomolekularpumpe ist. Beispielsweise kann die Verdichterpumpe einen Membranpumpe, eine Wälzkolbenpumpe oder eine Turbomolekularpumpe sein.

Von Vorteil ist es, wenn eine selektive Messung der Prüfgaskomponenten erfolgt, indem beispielsweise ein Absorbermaterial oder ein Getter im Bereich zwischen dem Anschluss und des Verdichtungsvolumens entlang des Gasleitungsweges genutzt werden, um die zu detektierenden Prüfgaskomponenten von den von möglichen anderen Gaskomponenten zu trennen. Nach Möglichkeit sollte mindestens eine von der Prüfgaskomponente abweichende Gaskomponente daran gehindert werden, in das Verdichtungsvolumen zu gelangen. Alternativ kann diese Gaskomponente im Verdichtungsvolumen selektiv gebunden/adsorbiert werden.

Von besonderer Bedeutung für die Erfindung ist, dass ein Gasdrucksensor mit dem Verdichtungsvolumen derart verbunden ist, dass der Gasdrucksensor innerhalb des Verdichtungsvolumens den Druck misst. Mit Hilfe des Gasdrucksensors wird dann die Veränderung des Drucks in dem Verdichtungsvolumen über der Zeit ermittelt und anschließend zur Leckagebeurteilung ausgewertet.

Bei dem Gasdrucksensor kann es sich um einen Drucksensor zur Messung des Totaldruckanstiegs innerhalb der Prüfkammer oder innerhalb des Prüflings nach der Druckanstiegsmethode handeln. Alternativ oder ergänzend kann der Gasdrucksensor als gasselektiver Partialdrucksensor zur Messung des Partialdruckanstiegs des Prüfgases ausgebildet sein. Als Partialdruck wird vorliegend der relative Anteil des Prüfgases in dem untersuchten Gasgemisch bezeichnet. Die Messung des Partialdruckanstiegs kann nach der Akkumulationsmethode durchgeführt werden, bei der der Partialdruckanstieg des sich im Messbereich akkumulierenden Gases bei abgesperrter Vakuumpumpe gemessen wird.

Bei dem Gasdrucksensor kann es sich insbesondere um ein Massenspektrometer, um einen Membranfenstersensor, um einen absorptionsspektroskopischen Sensor, z.B. einen Infrarotabsorptionssensor, um einen emissionsspektroskopischen Sensor, z.B. einen OES-Sensor, oder um Halbleiter-Gassensoren, chemische Gassensoren oder optische Gas-Detektoren handeln. Insbesondere handelt es sich bei dem Gasdrucksensor ("gas pressure sensor") nicht zwingend um einen Drucksensor ("pressure gauge"). Der Gasdrucksensor misst im Falle der Totaldruckanstiegsmethode den Anstieg des Totaldrucks eines Gasgemisches, das das Prüfgas beinhaltet. Im Falle des Partialdruckanstiegs misst der Gasdrucksensor den Anstieg des Partialdruckanteils mindestens des Prüfgases.

Die in einem Ausführungsbeispiel des Gasdrucksensors ausgeführte optische Spektralanalyse ermöglicht eine besonders schnelle Auswertung nach der Druckanstiegsmethode oder dem Akkumulationsprinzip des Totaldrucks und/oder des Partialdrucks.

Im Folgenden werden anhand der Figuren zwei Ausführungsbeispiele der Erfindung näher erläutert. Es zeigen:
- Fig. 1: ein erstes Ausführungsbeispiel in schematischer Ansicht und
- Fig. 2: ein zweites Ausführungsbeispiel in schematischer Ansicht.

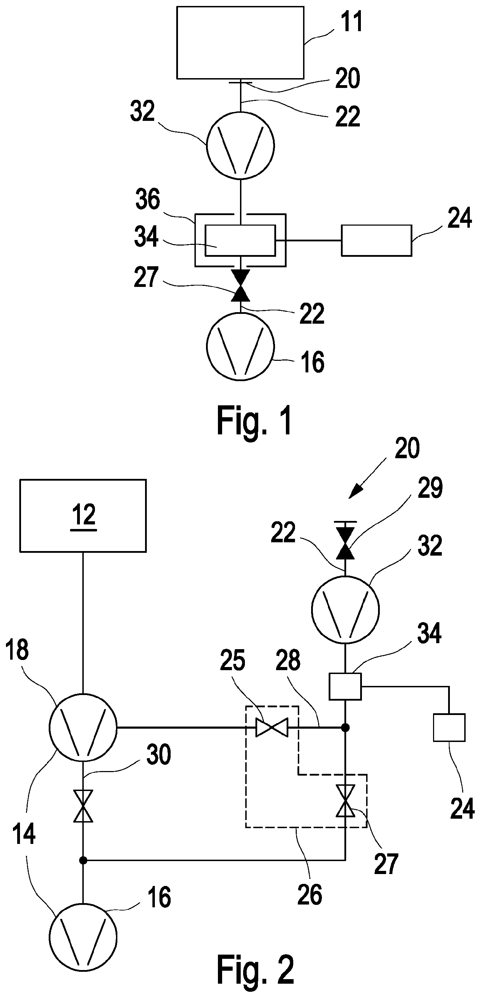

Fig. 1 zeigt einen an einen Anschluss 20 angeschlossenen Prüfling 11, der von Luft oder einem anderen Prüfgas umgeben ist. Der Anschluss 20 mündet in einen Gasleitungsweg 22, der in stromabwärtiger Richtung ausgehend von dem Anschluss 20 eine Verdichterpumpe 32, ein Verdichtungsvolumen 34, ein Ventil 27 und eine Vakuumpumpe 16 aufweist. Zunächst wird der Prüfling 11 mit der Pumpe 16 bei geöffnetem Ventil 27 evakuiert. Bei der Evakuierung kann der Verdichter 32 bereits zur Unterstützung mit eingesetzt werden. Sobald ein Schwellwertdruck im Prüfling 11 unterschritten wird, wird das Ventil 27 geschlossen. Die Verdichterpumpe verdichtet aus dem Prüfling gelangendes Gas in das Verdichtungsvolumen 34. Dabei kann der Prüfling gegen seiner äußeren Umgebung einen Unterdruck aufweisen, sodass Gas aus der äußeren Umgebung des Prüflings durch ein Leck im Prüfling in das Innere des Prüflings gelangt und über den Anschluss 20 dem Prüfling entnommen wird und von der Verdichterpumpe 32 in das Verdichtungsvolumen 34 verdichtet wird. Das Ventil 27 ist dabei verschlossen.

Alternativ handelt es sich bei dem Element 11 um eine Prüfkammer in Form einer herkömmlichen Vakuumkammer, die einen mit Prüfgas beaufschlagten Prüfling enthält. Der Innendruck des Prüflings ist dann größer als der Innendruck in der Prüfkammer 11 sodass Prüfgas aus dem Prüfling durch ein Leck in die Prüfkammer 11 gelangt und von dort über den Anschluss 20 von der Verdichterpumpe 32 in das Verdichtungsvolumen 34 hinein verdichtet wird, wenn das Ventil 27 geschlossen ist.

Ein in Fig. 1 nicht dargestelltes zweites Ventil 29, das bei dem in Fig. 2 dargestellten Ausführungsbeispiel vorgesehen ist, kann in dem Gasleitungsweg 22 zwischen der Verdichterpumpe 32 und dem Anschluss 20 oder alternativ auch zwischen dem Verdichtungsvolumen 34 und der Verdichterpumpe 32 vorgesehen sein. Mit Hilfe des Ventils 29 kann die Verdichterpumpe 32 bei einem Wechsel des Prüflings oder der Prüfkammer von dem Anschluss 20 getrennt werden. Mit Hilfe der Ventile 25, 27 und 29 kann das Verdichtungsvolumen abgeschlossen werden.

An das Verdichtungsvolumen ist ein Gasdrucksensor 24 angeschlossen, der den Gasdruck im Inneren des Verdichtungsvolumens misst. Bei dem Gasdrucksensor 24 kann es sich um einen Totaldrucksensor oder um einen Sensor zur integralen Messung des Partialdruckanstiegs des Prüfgases nach dem Akkumulationsprinzip innerhalb des Verdichtungsvolumens 24 handeln. Der Gasdrucksensor 24 kann ein optischer Sensor sein.

Mit der Gasdrucksensor 24 kann ein Totaldrucksensor und/oder ein gasselektiver Partialdrucksensor 24, z.B. in Form eines optischen Emissionsspektroskopie-Sensors (OES) handeln. Das Ventil 27 kann ein einzelnes Ventil oder eine mehrteilige Sperrvorrichtung sein, die, wie die Sperrvorrichtung 26 in Fig. 2, weitere Ventile aufweist, oder als Sperrvorrichtung ausgebildet sein und das Verdichtungsvolumen 34 von dem Vakuumsystem trennen kann.

Eine Temperaturstabilisiervorrichtung 36 umgibt das Verdichtungsvolumen 34 in Form eines isolierenden Gehäuses, welches mit einer Kühlvorrichtung und mit einer Heizvorrichtung zum Kühlen und zum Heizen des Verdichtungsvolumens versehen ist.

Das Verdichtungsvolumen 34 weist ein Gehäuse mit einem Einlass und einem Auslass auf, wobei der Einlass und der Auslass jeweils mit einem Abschnitt des Gasleitungsweges 22 verbunden sind. Das Gehäuse des Verdichtungsvolumens 34 kann einen größeren Querschnitt auf als die Rohrleitung des Gasleitungsweges 22 aufweisen, sodass das Verdichtungsvolumen 34 größer ist als ein gleichlanger Abschnitt der Rohrleitung des Gasleitungsweges 22. Zudem ist das Verdichtungsvolumen 34 kleiner als der Prüfling 11 bzw. die Prüfkammer 11 am Anschluss 20.

Entsprechendes gilt auch für das Ausführungsbeispiel in Fig. 2. Dort ist zusätzlich zu dem Gasdrucksensor 24 zur integralen Messung nach dem Akkumulationsprinzip ein massenspektrometrischer Gasdetektor 12 vorgesehen, der über eine Turbomolekularpumpe 18 und eine als Vorpumpe ausgebildete Vakuumpumpe 16 evakuiert wird. Die Turbomolekularpumpe 18 und die Vakuumpumpe 16 bilden ein Vakuumpumpensystem 14. Der Auslass der Vakuumpumpe 16 ist zur Atmosphäre hin offen. Der Gasleitungsweg 22 mündet an seinem dem Anschluss 20 gegenüberliegenden Ende in eine die Vakuumpumpe 16 und die Turbomolekularpumpe 18 verbindende Gasleitung 30. Ein weiterer Gasleitungsweg 28 verbindet einen Zwischenanschluss der Turbomolekularpumpe 18 mit einem zwischen dem Verdichtungsvolumen 34 und dem Ventil 27 angeordneten Abschnitt des Gasleitungsweges 22. Der Gasleitungsweg 28 weist ein weiteres steuerbares Ventil 25 auf. Das steuerbare Ventil 27 und das steuerbare Ventil 25 bilden eine Sperrvorrichtung 26, mit der das Verdichtungsvolumen 34 gegenüber dem Vakuumpumpsystem 14 abgesperrt werden kann.

Das Grundprinzip der Erfindung besteht darin, bei der integralen Leckdetektion nach dem Akkumulationsprinzip den Gasdruck nicht innerhalb der Prüfkammer oder im Prüfling zu messen, sondern in einem separaten Verdichtungsvolumen 34, in das eine zwischen Prüfling bzw. Prüfkammer 11 und Verdichtungsvolumen 34 angeordnete Verdichterpumpe 32 das Gas aus dem Prüfling, bzw. der Prüfkammer hinein verdichtet. Dadurch wird der Gasdruckanstieg um einen Faktor des Volumenverhältnisses zwischen dem Verdichtungsvolumen und dem Volumen innerhalb des Prüflings, bzw. der Prüfkammer erhöht. Je geringer das Volumen des Verdichtungsvolumens und je effizienter bzw. stärker die Verdichterpumpe 32 das Gas verdichtet, umso stärker ist der in dem Verdichtungsvolumen resultierende Druckanstieg.

Dabei kann in dem Verdichtungsvolumen 34 anstelle der zeitlichen Veränderung des Totaldrucks auch die zeitliche Änderung eines Partialdrucks des Prüfgases gemessen werden, um eine Unterscheidung gegenüber Gaskomponenten zu ermöglichen, die von den oder aus den Wänden der Prüfkammer oder des Prüflings desorbieren, wie insbesondere Wasserdampf. Die Akkumulation erfolgt dadurch in deutlich verkürzter Zeit als in dem Fall der Akkumulation innerhalb der Prüfkammer oder innerhalb des Prüflings, sodass die erfindungsgemäße Leckdetektion eine schnellere und präziser Leckageerkennung ermöglicht, wodurch auch die Einflüsse desorbierender Gasbestandteile reduziert werden.

## Patentansprüche

1. Lecksuchvorrichtung zur Detektion eines Gaslecks in einem Prüfling, mit
einem Anschluss (20) für den Prüfling oder eine den Prüfling aufnehmende Prüfkammer,
einem mit dem Anschluss (20) verbundenen Gasleitungsweg (22), der ein Ventil (27) zum selektiven Verschließen des Gasleitungsweges (22) aufweist, wobei
der Gasleitungsweg (22) eine Verdichterpumpe (32) derart aufweist, dass der Einlass der Verdichterpumpe durch den Gasleitungsweg (22) mit dem Anschluss (20) und der Gasauslass der Verdichterpumpe über den Gasleitungsweg (22) mit dem Ventil (27) verbunden ist,
der Gasleitungsweg (22) derart mit einem zwischen dem Auslass der Verdichterpumpe (32) und dem Ventil (27) angeordneten Verdichtungsvolumen (34) verbunden ist, dass die Verdichterpumpe (32) bei geschlossenem Ventil (27) Gas von dem Anschluss (20) in das Verdichtungsvolumen (34) hinein verdichtet, und
das Verdichtungsvolumen mit einem Gasdrucksensor (24) zum Messen des Drucks in dem Verdichtungsvolumen (34) verbunden ist,
**dadurch gekennzeichnet,**
**dass** das Verdichtungsvolumen (34) mit einer Temperaturstabilisiervorrichtung (36) versehen ist, die dazu ausgebildet ist, die Temperatur innerhalb des Verdichtungsvolumens (34) zu stabilisieren,
**dass** die Temperaturstabilisiervorrichtung eine das Verdichtungsvolumen heizende Heizung und/oder das Verdichtungsvolumen kühlende Kühlvorrichtung und, weiterhin optional, eine das Verdichtungsvolumen gegenüber deren äußerer Umgebung isolierende Isoliervorrichtung aufweist.

2. Lecksuchvorrichtung nach Anspruch 1, **dadurch gekennzeichnet, dass** der Gasdrucksensor (24) zur integralen Messung der Totaldruckveränderung nach der Druckanstiegsmethode oder der Druckabfallmethode und/oder zur Messung der Partialdruckveränderung mindestens eines Prüfgases nach der Partialdruckanstiegsmethode oder der Partialdruckabfallmethode ausgebildet ist.

3. Lecksuchvorrichtung nach einem der vorhergehenden Ansprüche, **dadurch gekennzeichnet, dass** das Verdichtungsvolumen geringer ist als das Prüfkammervolumen einer an den Anschluss (20) angeschlossenen Prüfkammer oder das Prüflingsvolumen eines an den Anschluss (20) angeschlossenen Prüflings (20).

4. Lecksuchvorrichtung nach dem vorhergehenden Anspruch, **dadurch gekennzeichnet, dass** das Verdichtungsvolumen maximal halb so groß, bevorzugt ein Zehntel so groß und besonders bevorzugt ein Hundertstel so groß ist wie das Prüfkammervolumen oder das Prüflingsvolumen.

5. Lecksuchvorrichtung nach einem der vorhergehenden Ansprüche, **dadurch gekennzeichnet, dass** das Verdichtungsvolumen (34) in Längsrichtung des Gasleitungsweges (22) einen größeren Querschnitt aufweist als der Gasleitungsweg, sodass das Verdichtungsvolumen (34) größer ist als das Volumen in einem Abschnitt des Gasleitungsweges (22), der genauso lang ist wie das Verdichtungsvolumen (34).

6. Lecksuchvorrichtung nach einem der vorhergehenden Ansprüche, **dadurch gekennzeichnet, dass** die Verdichterpumpe (32) eine Vakuumpumpe, eine Membranpumpe, eine Wälzkolbenpumpe oder eine Turbomolekularpumpe ist.

7. Lecksuchvorrichtung nach einem der vorhergehenden Ansprüche, **dadurch gekennzeichnet, dass** der Gasleitungsweg auf der der Verdichterpumpe (32) gegenüberliegenden Seite des Ventils (27) mit einer Vakuumpumpe (16) verbunden ist.

8. Lecksuchvorrichtung nach einem der vorhergehenden Ansprüche, **dadurch gekennzeichnet, dass** das Verdichtungsvolumen (34) ein Absorbermaterial oder einen Getter als Filter aufweist, um das von dem Gasdrucksensor (24) zu detektierende Prüfgas in das Verdichtungsvolumen (34) hinein zu lassen und von dem Prüfgas verschiedene Gase zu blockieren oder zu binden.

9. Lecksuchvorrichtung nach einem der vorhergehenden Ansprüche, **dadurch gekennzeichnet, dass** die Verdichterpumpe (32) oder eine von der Verdichterpumpe verschiedene weitere Pumpe zwischen dem Verdichtungsvolumen (34) und dem Anschluss (20) derart gasselektiv ist, dass das von dem Gasdrucksensor (24) zu detektierende Prüfgas in das Verdichtungsvolumen (34) gefördert wird und mindestens ein von dem Prüfgas verschiedenes Gas blockiert oder weniger effektiv verdichtet wird.

10. Verfahren zur Detektion eines Gaslecks in einem Prüfling unter Verwendung einer Lecksuchvorrichtung nach einem der vorhergehenden Ansprüche, mit den Schritten:
Fördern eines Gases aus einer an den Anschluss (20) angeschlossenen Prüfkammer oder aus einem an den Anschluss (20) angeschlossenen Prüfling mit der Verdichterpumpe (32) von dem Anschluss (20) entlang des Gasleitungsweges (22) in das Verdichtungsvolumen (34) derart, dass das Gas in dem Verdichtungsvolumen (34) einen höheren Druck aufweist als in dem Prüfling oder in der Prüfkammer, während das Ventil (27) geschlossen ist,
Messen des Gasdrucks innerhalb des Verdichtungsvolumens (34),
Ermitteln der zeitlichen Änderung des gemessenen Gasdrucks innerhalb des Verdichtungsvolumens (34) und
Beurteilen, ob der Prüfling ein Leck aufweist, anhand der ermittelten Veränderung des gemessenen Gasdrucks.

11. Verfahren nach dem vorhergehenden Anspruch, **dadurch gekennzeichnet, dass** der gemessene Gasdruck der absolute Gasdruck in Form des Totaldrucks innerhalb des Verdichtungsvolumens (34) oder ein Partialdruck einer Prüfgaskomponente in einem in dem Verdichtungsvolumen (34) enthaltenen Gasgemisch ist, wobei die ermittelte Änderung des Gasdrucks ein Druckanstieg ist.

## Claims

1. A leak detection device for detecting a gas leak in a test specimen comprising
a port (20) for the test specimen or a test chamber receiving the test specimen,
a gas conduction path (22) connected to the port (20) and having a valve (27) for selectively closing the gas conduction path (22), wherein
the gas conduction path (22) comprises a compressor pump (32) such that the inlet of the compressor pump is connected to the port (20) through the gas conduction path (22) and the gas outlet of the compressor pump is connected to the valve (27) through the gas conduction path (22),
the gas conduction path (22) is connected to a compression volume (34) arranged between the outlet of the compressor pump (32) and the valve (27) such that the compressor pump (32) compresses gas from the port (20) into the compression volume (34) when the valve (27) is closed, and
the compression volume is connected to a gas pressure sensor (24) for measuring the pressure inside the compression volume (34).
**characterized in that**
the compression volume (34) is provided with a temperature stabilizing device (36) that is configured to stabilize the temperature inside the compression volume (34),
the temperature stabilizing device comprises a heating device heating the compression volume and/or a cooling device cooling the compression volume and/or an insulating device insulating the compression volume from its external environment.

2. The leak detection device according to claim 1, **characterized in that** the gas pressure sensor (24) is configured for integral measurement of the total pressure change according to the pressure rise method or the pressure drop method and/or for measurement of the partial pressure change of at least one test gas according to the partial pressure rise method or the partial pressure drop method.

3. The leak detection device according to any one of the preceding claims, **characterized in that** the compression volume is smaller than the test chamber volume of a test chamber connected to the port (20) or the test specimen volume of a test specimen (20) connected to the port (20).

4. The leak detection device according to the preceding claim, **characterized in that** the compression volume is at most half as large, preferably one tenth as large and particularly preferably one hundredth as large as the test chamber volume or the test specimen volume.

5. The leak detection device according to any one of the preceding claims, **characterized in that** the compression volume (34) has a larger cross-section in the longitudinal direction of the gas conduction path (22) than the gas conduction path, such that the compression volume (34) is larger than the volume in a section of the gas conduction path (22) that is as long as the compression volume (34).

6. The leak detection device according to any one of the preceding claims, **characterized in that** the compressor pump (32) is a vacuum pump, a diaphragm pump, a Roots pump or a turbomolecular pump.

7. The leak detection device according to any one of the preceding claims, **characterized in that** the gas conduction path is connected to a vacuum pump (16) on the side of the valve (27) opposite to the compressor pump (32).

8. The leak detection device according to any one of the preceding claims, **characterized in that** the compression volume (34) comprises an absorber material or a getter as a filter to allow the test gas to be detected by the gas pressure sensor (24) to pass into the compression volume (34) and to block or trap gases other than the test gas.

9. The leak detection device according to any one of the preceding claims, **characterized in that** the compressor pump (32) or another pump different from the compressor pump is arranged between the compression volume (34) and the port (20) in such a gas-selective manner that the test gas to be detected by the gas pressure sensor (24) is conveyed into the compression volume (34) and at least one gas other than the test gas is blocked or compressed less effectively.

10. A method for detecting a gas leak in a test specimen using a leak detection device according to any one of the preceding claims, comprising the following steps:
conveying a gas from a test chamber connected to the port (20) or from a test specimen connected to the port (20) using the compressor pump (32) from the port (20) along the gas conduction path (22) into the compression volume (34) such that the gas in the compression volume (34) has a higher pressure than in the test specimen or in the test chamber, while the valve (27) is closed,
measuring the gas pressure inside the compression volume (34),
determining the temporal change in the measured gas pressure inside the compression volume (34), and
evaluating whether the test specimen comprises a leak based on the determined change in the measured gas pressure.

11. The method according to the preceding claim, **characterized in that** the measured gas pressure is the absolute gas pressure in the form of the total pressure inside the compression volume (34) or a partial pressure of a test gas component in a gas mixture contained in the compression volume (34), the determined change in the gas pressure being a pressure rise.

## Revendications

1. Dispositif de détection de fuite pour détecter une fuite de gaz dans un objet à tester, comprenant
un raccord (20) pour l'objet à tester ou une chambre de test recevant l'objet à tester, un trajet de conduite de gaz (22) raccordé au raccord (20), qui comprend une vanne (27) pour la fermeture sélective du trajet de conduite de gaz (22),
le trajet de conduite de gaz (22) comprenant une pompe à compression (32) de façon telle que, par le trajet de conduite de gaz (22), l'entrée de la pompe à compression soit raccordée au raccord (20) et, via le trajet de conduite de gaz (22), la sortie de la pompe à compression soit raccordée à la vanne (27),
le trajet de conduite de gaz (22) étant raccordé à un volume de compression (34) disposé entre la sortie de la pompe à compression (32) et la vanne (27) de façon telle que, lorsque la vanne (27) est fermée, la pompe à compression (32) fait comprimer du gaz du raccord (20) dans le volume de compression (34), et
le volume de compression étant raccordé à un capteur de pression de gaz (24) pour mesurer la pression dans le volume de compression (34),
**caractérisé en ce**
**que** le volume de compression (34) est pourvu d'un dispositif de stabilisation de température (36) qui est configuré pour stabiliser la température à l'intérieur du volume de compression (34),
**que** le dispositif de stabilisation de température comprend un chauffage chauffant le volume de compression et/ou un dispositif de refroidissement refroidissant le volume de compression et en outre, en option, un dispositif d'isolation isolant le volume de compression par rapport à l'entourage extérieur de ce dernier.

2. Dispositif de détection de fuite selon la revendication 1, **caractérisé en ce que** le capteur de pression de gaz (24) est configuré pour mesurer intégralement le changement de pression totale selon le principe d'augmentation de pression ou le principe de chute de pression et/ou pour mesurer le changement de pression partielle d'au moins un gaz à tester selon le principe de l'augmentation de la pression partielle ou le principe de chute de pression partielle.

3. Dispositif de détection de fuite selon l'une des revendications précédentes, **caractérisé en ce que** le volume de compression est inférieur au volume de la chambre de test d'une chambre de test raccordée au raccord (20) ou au volume d'objet à tester d'un objet à tester (20) raccordé au raccord (20).

4. Dispositif de détection de fuite selon la revendication précédente, **caractérisé en ce que** le volume de compression est au maximum la moitié, de préférence un dixième et particulièrement préféré un centième du volume de la chambre de test ou du volume de l'objet à tester.

5. Dispositif de détection de fuite selon l'une des revendications précédentes, **caractérisé en ce que** le volume de compression (34) a, en direction longitudinale du trajet de conduite de gaz (22), une section transversale plus grande que le trajet de conduite de gaz, si bien que le volume de compression (34) est plus grand que le volume dans une section du trajet de conduite de gaz (22) qui a la même longueur que le volume de compression (34).

6. Dispositif de détection de fuite selon l'une des revendications précédentes, **caractérisé en ce que** la pompe à compression (32) est une pompe à vide, une pompe à diaphragme, une pompe à lobes ou une pompe turbomoléculaire.

7. Dispositif de détection de fuite selon l'une des revendications précédentes, **caractérisé en ce que**, sur le côté de la vanne (27) opposé à la pompe à compression (32), le trajet de conduite de gaz est relié à une pompe à vide (16).

8. Dispositif de détection de fuite selon l'une des revendications précédentes, **caractérisé en ce que** le volume de compression (34) comprend un matériau absorbant ou getter comme filtre pour laisser pénétrer dans le volume de compression (34) le gaz de test à détecter par un capteur de pression de gaz (24) et pour bloquer ou lier différents gaz par le gaz de test.

9. Dispositif de détection de fuite selon l'une des revendications précédentes, **caractérisé en ce que** la pompe à compression (32) ou une autre pompe différente de la pompe à compression entre le volume de compression (34) et le raccord (20) sélectionne le gaz de manière telle que le gaz de test à détecter par le capteur de pression de gaz (24) soit propulsé dans le volume de compression (34) et qu'au moins un gaz différent du gaz de test soit bloqué ou comprimé de manière moins effective.

10. Procédé pour détecter une fuite de gaz dans un objet à tester en utilisant un dispositif de détection de fuite selon l'une des revendications précédentes, avec les étapes :
propulser un gaz à partir d'une chambre de test raccordée au raccord (20) ou à partir d'un objet à tester raccordé au raccord (20), moyennant la pompe à compression (32), du raccord (20) le long du trajet de conduite de gaz (22) dans le volume de compression (34) de manière telle que le gaz dans le volume de compression (34) ait une pression plus élevée que dans l'objet à tester ou dans une chambre de test pendant que la vanne (27) est fermée,
mesurer la pression du gaz à l'intérieur du volume de compression (34),
détecter le changement temporel de la pression de gaz mesurée à l'intérieur du volume de compression (34) et
déterminer à partir de la modification détectée de la pression de gaz mesurée, si l'objet à tester a une fuite.

11. Procédé selon la revendication précédente, **caractérisé en ce que** la pression de gaz mesurée est la pression de gaz absolue, sous la forme de la pression totale à l'intérieur du volume de compression (34), ou une pression partielle d'un composant du gaz à tester dans un mélange de gaz contenu dans le volume de compression (34), la modification détectée de la pression de gaz étant une augmentation de la pression.
